# FASCICULE DE BREVET EUROPEEN

(11) **EP 1 012 656 B1**
(45) Date de publication et mention de la délivrance du brevet: **23.07.2003**
(21) Numéro de dépôt: 98920408.6
(22) Date de dépôt: 12.05.1998
(51) Int. Cl.: G02B 27/22, G02B 5/32

(54) **PROCEDE D'OBTENTION D'IMAGES EN RELIEF ET DISPOSITIF POUR LA MISE EN OEUVRE DE CE PROCEDE**
VERFAHREN ZUR HERSTELLUNG VON RELIEFBILDERN UND VORRICHTUNG ZUR DURCHFÜHRUNG DES VERFAHRENS
STEREOSCOPIC IMAGE PRODUCTION METHOD AND DEVICE FOR IMPLEMENTING SAME

(30) Priorité: 23.05.1997 BE 9700456
(43) Date de publication de la demande: 28.06.2000
(73) Titulaire: D'Ursel, Wauthier, B-1170 Bruxelles (BE)
(72) Inventeur: D'Ursel, Wauthier, B-1170 Bruxelles (BE)
(74) Mandataire: Claeys, Pierre
(86) Numéro de dépôt international: BE9800065
(87) Numéro de publication internationale: WO98053358

(56) Documents cités:
- US-A- 3 802 769
- US-A- 4 597 634
- US-A- 5 111 313
- US-A- 5 379 133
- PATENT ABSTRACTS OF JAPAN vol. 015, no. 156 (P-1192), 18 avril 1991 & JP 03 025490 A (FUJITSU LTD), 4 février 1991
- PENNEL HENRI-PIERRE: "L'ère de la nouvelle dimension" SCIENCE ET VIE, vol. 928, janvier 1995, pages 68-72, XP002054688 cité dans la demande
- SAXBY GRAHAM: "Hologrammes" 1984 , MASSON , PARIS XP002054689 cité dans la demande voir page 129

## Description

La présente invention est relative à un procédé d'obtention d'images en relief, et à un dispositif pour la mise en oeuvre de ce procédé, ainsi qu'à un écran et à un support d'informations d'image à mettre en oeuvre dans un tel procédé.

Beaucoup de techniques ont été développées pour produire des images en trois dimensions. Les procédés nécessitant le port de lunettes permettent de transmettre à chaque oeil de l'observateur l'image qui lui est destinée. On peut citer par exemple des anaglyphes, des lunettes polarisées et des lunettes à cristaux liquides. Dans les salles de projection équipées pour la mise en oeuvre de tels procédés, tous les spectateurs, quelle que soit leur place, voient l'objet sous le même angle. Il reste hors de question de voir l'un ou l'autre des côtés de l'objet filmé en se déplaçant devant l'écran.

Un système à réseau lenticulaire connu permet au spectateur de percevoir le relief sans porter de lunettes ou sans utiliser de dispositif stéréoscopique. Si ce réseau évite le port de lunettes, il n'en présente pas moins d'autres désagréments. Tout d'abord, il doit être parfaitement ajusté par rapport aux images formées derrière les faces des lentilles, et le spectateur ne peut presque pas bouger pendant l'observation, sous peine de ne plus voir l'image et le relief. Le champ de vision est limité.

L'holographie permet de restituer parfaitement la vision d'un volume mais nécessite l'usage de lumière cohérente. De plus, le volume des objets dont on réalise la prise de vue est limité. Un autre handicap de cette technique réside dans le fait qu'il n'est pas possible de projeter un hologramme.

D'autres procédés, tels que le 3D Volumetric Display System (H.-P. PENEL, L'ère de la nouvelle Dimension, Science & Vie, 928, 1995, p. 68-72), et celui décrit dans le US-A-5.111.313, permettent de projeter des images en relief animées sur un écran mais font appel à une source lumineuse cohérente et la forme cylindrique de l'écran limite la taille des images obtenues. De plus, la déviation des rayons lumineux est obtenue par le mouvement de certaines pièces mécaniques ce qui nécessite un contrôle électronique sophistiqué.

La présente invention a pour but d'éviter les inconvénients des procédés et dispositifs de la technique antérieure, et de mettre au point un procédé amélioré permettant l'obtention d'images en relief intégral, à parallaxe horizontale, à partir d'objets de toutes dimensions, de façon notamment que le spectateur puisse se déplacer en percevant le relief de l'image obtenue.

Pour résoudre ces problèmes, on met en oeuvre suivant l'invention, un procédé d'obtention d'images en relief à parallaxe horizontale comprenant
- une première dispersion par diffraction de rayons électromagnétiques émis par un objet,
- une prise de vues de l'objet au moyen d'au moins un objectif capable de capter au moins une partie desdits rayons électromagnétiques dispersés, et permettant d'obtenir un nombre illimité de points de vue de l'objet, avec un point de vue par longueur d'onde,
- une projection de la prise de vues à travers un moyen d'écran, et
- une deuxième dispersion et une diffusion, par le moyen d'écran, de rayons électromagnétiques émis lors de la projection, avec formation d'images en relief de l'objet,
- les première et deuxième dispersions produisant une déviation latérale de rayons émis correspondants. L'invention exploite ainsi la composition spectrale des sources de rayonnement et utilise le nombre illimité de longueurs d'onde que contient un domaine spectral, pour obtenir autant d'angles de vue d'un même objet que de longueurs d'onde. Le procédé suivant l'invention permet d'obtenir des images en relief intégral à parallaxe horizontale et qui peuvent être en couleurs. Il faut noter que la déviation des rayons lumineux au travers des éléments optiques s'obtient sans mouvement de ceux-ci. Il n'est pas nécessaire d'utiliser un système de contrôle électronique sophistiqué ni une source lumineuse cohérente. L'invention permet la prise de vues d'objets animés de taille illimitée et sous un éclairage ordinaire. La projection sur un écran, même de grandes dimensions, permet de modifier à volonté la taille de l'image en relief à obtenir.

Suivant une forme de réalisation de l'invention, la deuxième dispersion comprend une déviation latérale de rayons projetés, dans un même sens ou dans un sens opposé à la déviation latérale de la première dispersion. Le procédé suivant l'invention permet ainsi l'obtention d'un relief d'image orthoscopique ou pseudoscopique.

Suivant une autre forme de réalisation de l'invention, la projection susdite est effectuée par l'objectif susdit. Le procédé permet ainsi une projection immédiate, au travers d'un écran, d'une image en relief de l'objet à visualiser.

Suivant une forme de réalisation avantageuse de l'invention, le procédé comprend une réception d'informations d'image, obtenues au cours de la prise de vues, sur au moins un moyen de support d'informations permettant ultérieurement ladite projection. Cette réception peut par exemple être la sensibilisation d'un support photosensible argentique permettant une projection, ou encore un enregistrement sur support par exemple électronique. Dans ce dernier cas, il est notamment possible de convertir l'information sous forme numérique : l'avantage essentiel que confère le numérique réside dans le traitement des informations, par exemple pour créer des effets spéciaux ou des images de synthèse.

Suivant encore une autre forme de réalisation de l'invention, le procédé comprend un ajustement de l'éloignement de l'image en relief par rapport au moyen d'écran par une intercalation dans les étapes du procédé d'au moins une dispersion supplémentaire de rayons par diffraction, avec déviation latérale supplémentaire. Le volume de l'image peut ainsi être déplacé dans le sens antéro-postérieur, par rapport à l'écran.

Des détails et particularités de formes de réalisation du procédé suivant l'invention sont indiqués aux revendications 1 à 15 annexées.

L'invention concerne aussi un dispositif d'obtention d'images en relief.

Suivant une forme de réalisation, ce dispositif comprend
- un premier réseau de diffraction permettant une première dispersion de rayons électromagnétiques émis par l'objet avec déviation latérale de ceux-ci,
- un objectif capable de capter au moins une partie des rayons électromagnétiques dispersés, et
- un moyen d'écran à travers lequel des rayons électromagnétiques provenant de l'objectif subissent une deuxième dispersion avec déviation latérale et une diffusion. Un tel dispositif permet simultanément la prise de vues et la projection de l'image en relief.

Suivant une autre forme de réalisation, le dispositif suivant l'invention comprend
- un premier réseau de diffraction permettant une première dispersion de rayons électromagnétiques émis par l'objet avec déviation latérale de ceux-ci,
- au moins un objectif capable de capter au moins une partie des rayons électromagnétiques dispersés,
- au moins un moyen de support d'informations d'image capable de recevoir les rayons électromagnétiques captés par le ou les objectifs, et de permettre ultérieurement une projection, à travers au moins un objectif de projection, des informations d'image transmises par ces rayons électromagnétiques captés, et
- un moyen d'écran à travers lequel des rayons électromagnétiques provenant du ou des objectifs de projection subissent une deuxième dispersion avec déviation latérale et une diffusion. Un tel dispositif permet la réception d'informations d'image sur un ou plusieurs supports et la projection ultérieure sur l'écran de l'image en relief obtenue par le procédé suivant l'invention.

Des détails et particularités de formes de réalisation du dispositif suivant l'invention sont indiqués aux revendications 16 à 27.

L'invention concerne également un écran ainsi qu'un support d'informations d'image à mettre en oeuvre dans le procédé suivant l'invention.

D'autres détails de l'invention ressortiront de la description donnée ci-après, avec référence aux dessins annexés qui illustrent des exemples non limitatifs de l'invention.

La figure 1 est une vue schématique du dessus d'une première application de la présente invention, permettant d'obtenir une image en relief sans support d'informations d'image.

Les figures 2a et 2b sont des vues en élévation latérale et en perspective de l'objectif et de deux variantes d'écran mis en oeuvre dans l'application illustrée sur la figure 1.

Les figures 3 et 4 sont des vues en perspective de deux montages optiques pour réaliser un écran holographique suivant la présente invention.

La figure 5 est une vue du dessus d'une prise de vues primaire avec un support d'informations d'image suivant l'invention.

La figure 6 est une vue du dessus d'une projection primaire avec le support d'informations d'image de la figure 5.

Les figures 7a, 7b, 8a et 8b sont des vues en coupe de variantes de support d'informations d'image utilisées dans cette invention, lors de la prise de vues.

La figure 9 est une vue en coupe d'une variante de support d'informations d'image, lors de la projection.

Les figures 10a, 10b et 10c sont des vues du dessus de prises de vues ou de projections, secondaires pour 10a et 10c, primaire pour 10b.

La figure 11 est une vue du dessus d'une prise de vues secondaire avec un support d'informations d'image suivant l'invention.

La figure 12 est une vue du dessus d'une projection primaire, suite à la prise de vues secondaire réalisée à la figure 11.

La figure 13 est une vue du dessus d'une prise de vues primaire avec deux supports d'informations d'image suivant l'invention et de la projection primaire réalisée avec ces supports.

La figure 14 est une vue du dessus d'une prise de vues et d'une projection secondaires avec deux supports suivant l'invention.

La figure 15 est une vue du dessus d'une projection primaire avec deux supports suite à la prise de vues secondaire réalisée à la figure 14.

La figure 16 est une vue du dessus de l'opération de transfert des éléments constitutifs d'image d'un support suivant l'invention vers un autre.

La figure 17 est une vue du dessus d'une projection primaire avec deux supports suivant l'invention, après transfert.

La figure 18 est une vue du dessus d'une projection primaire avec trois supports suivant l'invention, après transfert et lorsqu'une prise de vues secondaire a été réalisée.

Sur les différents dessins, les éléments identiques ou analogues sont indiqués par les mêmes références. Il doit être entendu que ces dessins sont schématiques, qu'ils ne sont pas à l'échelle, et que les éléments sont fréquemment représentés dissociés largement l'un de l'autre pour permettre une meilleure compréhension des phénomènes optiques.

L'invention s'applique aux rayonnements électromagnétiques d'une manière générale, même si les exemples proposés se situent dans le domaine spectral de la lumière visible.

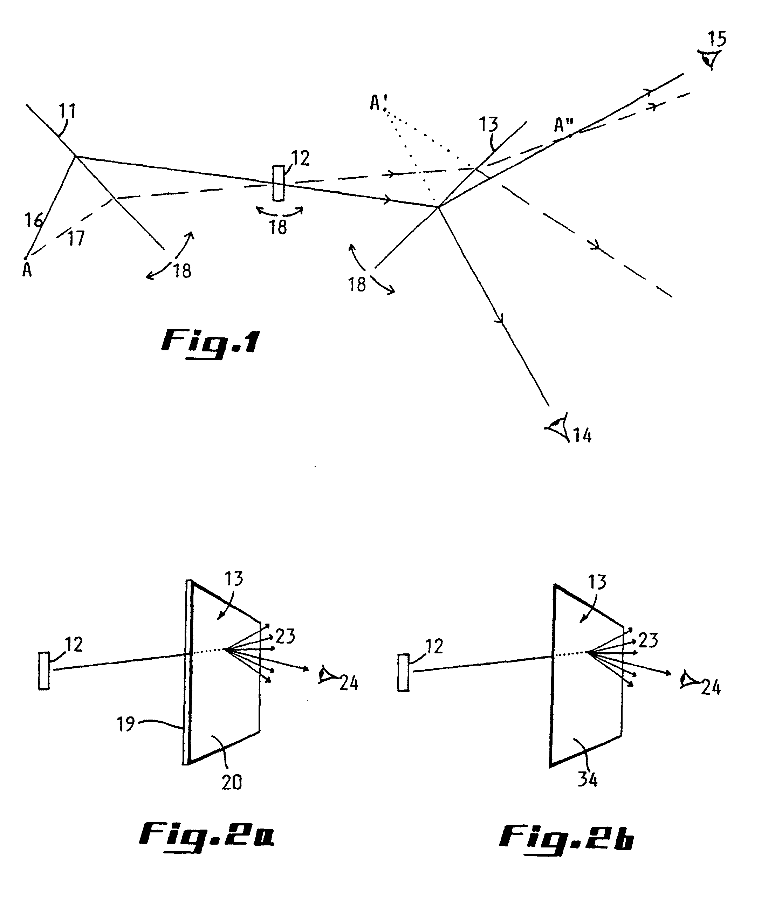

Selon l'invention telle qu'illustrée sur la figure 1, une prise de vues d'un objet A est obtenue au travers d'au moins un réseau de diffraction 11 qui réalise une fonction de dispersion, autour d'axes de dispersion parallèles, c'est-à-dire que les rayons électromagnétiques sont déviés latéralement, en fonction de la longueur d'onde.

Il faut entendre, suivant la présente invention, que tous les éléments optiques et les fonctions de la présente invention sont orientés par rapport à la direction verticale de l'image en relief à obtenir. Les fonctions de dispersion et de diffusion sont orientées en fonction de la vision binoculaire du spectateur.

Le réseau 11 utilisé est de préférence constitué de traits/franges rectilignes parallèles équidistant(e)s et disposé(e)s parallèlement auxdits axes de dispersion. Tout autre réseau qui dévie latéralement convient à la présente invention, toutefois lorsque les traits/franges ont une disposition différente de celle décrite, l'image en relief obtenue présente une certaine déformation. De tels réseaux de diffraction sont bien connus dans la technique et aisément disponibles et ils ne seront donc pas décrits plus en détail. On peut utiliser par exemple, dans le cadre de cette invention, des réseaux de diffraction épais (à effet de volume) qui présentent un meilleur rendement de diffraction. Le faisceau d'ordre zéro de tels réseaux est atténué fortement (selon le principe de la diffraction de BRAGG).

Grâce à la déviation obtenue en fonction de la longueur d'onde (dispersion), la prise de vues permet d'obtenir un nombre illimité de points de vue de l'objet A, avec un point de vue par longueur d'onde, formant ainsi une image composée d'autant d'éléments constitutifs que de longueurs d'onde et offrant une multitude de perspectives.

La différence d'angle de vue entre deux longueurs d'onde est fonction, de manière croissante, de la distance entre l'objectif 12 et le réseau 11 dit "primaire" ainsi que de la dispersion obtenue par ce dernier.

Chaque point de l'objet projette sa propre succession de points homologues, résultant de la composition spectrale des rayons émis.

La figure 1 montre deux angles de vue 16 et 17 du point d'objet A. Dans le dispositif illustré sur cette figure, les éléments constitutifs d'image obtenus sont immédiatement projetés par l'objectif de prise de vues 12 sur un écran 13 au travers duquel un observateur 14 ou 15 peut regarder l'image en relief obtenue A' ou A". L'objectif 12 sert donc ici également d'objectif de projection.

Selon l'invention, l'écran 13 réalise une fonction de dispersion et une fonction de diffusion 23.

Ainsi que le fait ressortir la figure 1, il est possible de sélectionner un écran 13 dont la dispersion produise une déviation latérale dans le même sens que la dispersion produite par le réseau 11, et on obtient alors un relief d'image orthoscopique A' dans cet exemple. Lorsque la déviation par l'écran 13 a lieu dans le sens contraire, on obtient un relief d'image pseudoscopique A" dans cet exemple.

L'orientation des pièces optiques utilisées 11, 12 et 13 peut être sélectionnée, car d'une manière courante celles-ci peuvent être agencées de manière à pouvoir pivoter selon les flèches 18 autour d'axes de rotation, perpendiculaires au plan du dessin dans cette figure 1.

La diffusion, illustrée sur les figures 2a et 2b, est effective en chaque point de l'écran et permet de voir l'image en relief lorsqu'on se déplace verticalement.

La fonction de dispersion décompose la lumière en un spectre. En conséquence, quelle que soit sa position, l'oeil ne reçoit, pour chaque point de l'écran, qu'une longueur d'onde provenant d'une source lumineuse de projection. En modifiant l'angle de vue horizontalement, les points d'image en relief obtenus à partir de cette source passent successivement par toutes les couleurs du spectre.

Le relief d'image obtenu sur l'écran 13 est fonction de la dispersion par celui-ci, de manière décroissante. On peut donc à volonté accentuer ou atténuer la parallaxe suivant la puissance de dispersion choisie.

Selon une variante de réalisation d'écran suivant l'invention, illustrée sur la figure 2a, on place, dans le trajet optique de la projection, d'une part, un réseau 19 réalisant une fonction de dispersion, autour d'axes de dispersion parallèles, avec déviation latérale, tel que par exemple celui nécessaire à la prise de vues, et, d'autre part, un diffuseur 20 réalisant une fonction de diffusion, orientée selon une direction perpendiculaire à l'orientation de la dispersion. La position respective du réseau 19 et du diffuseur 20 est choisie selon la mise au point à réaliser et donc ces éléments sont déplaçables l'un par rapport à l'autre de manière réglable. Cette diffusion des rayons transmis est obtenue par exemple par un diffuseur ligné, c'est-à-dire constitué de rayures droites et parallèles orientées perpendiculairement aux axes de dispersion du réseau 19, qui est connu dans la technique et qui ne sera donc pas décrit de manière plus détaillée (voir par exemple G. SAXBY, Hologrammes, Masson, 1984, p. 129). Dans cette variante de réalisation la dispersion et la diffusion ont lieu successivement.

Selon une autre variante de réalisation de l'écran, on utilise un hologramme par transmission 34 qui assure les deux fonctions simultanément. Cet élément optique holographique (HOE) constitue l'écran représenté sur la figure 2B.

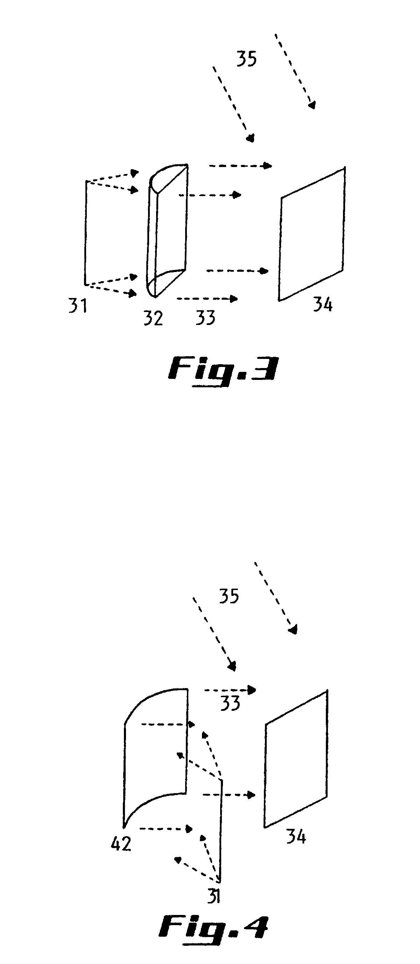

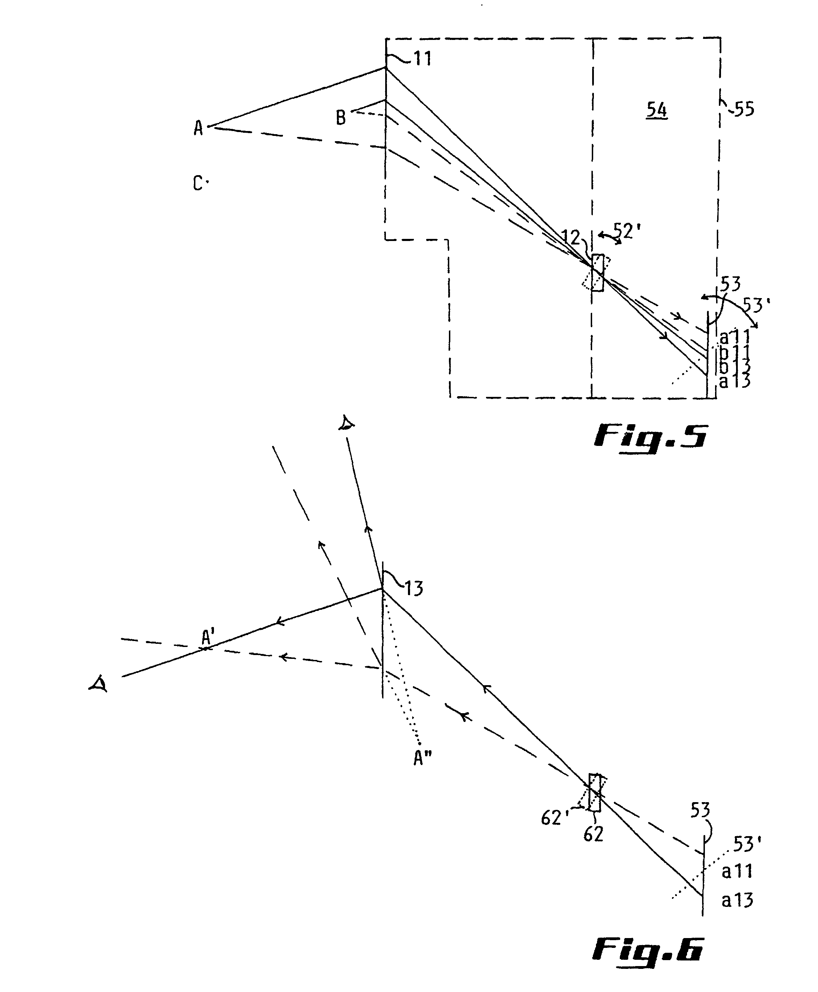

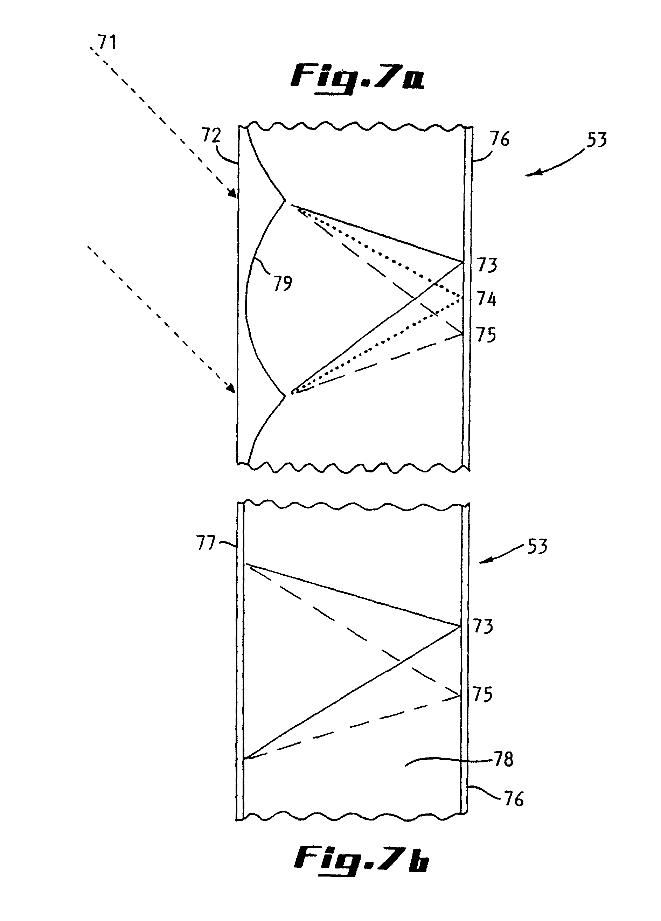

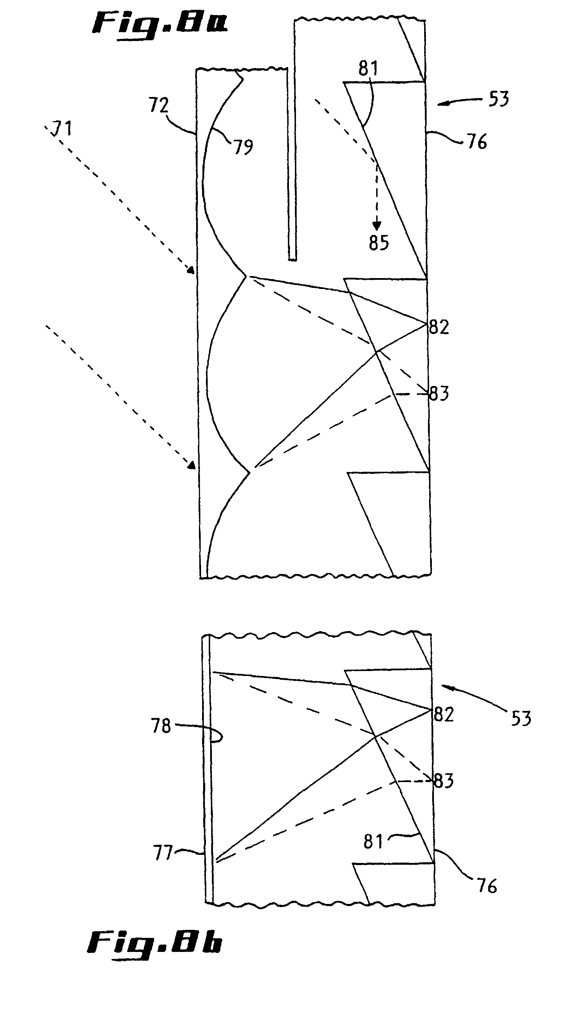

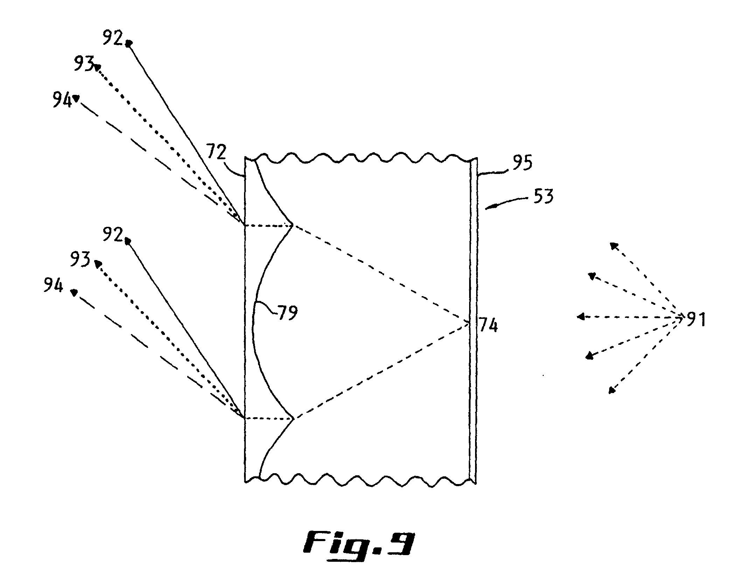

L'hologramme de l'invention est réalisé selon des principes holographiques bien connus de l'homme de métier. Les faisceaux objet et de référence sont orientés par rapport à la direction verticale de l'hologramme à réaliser. Le faisceau de référence 35 (voir figures 3 et 4) de l'hologramme 34 est collimaté et forme avec le faisceau objet 33 un angle horizontal (écart angulaire horizontal). Le faisceau objet est obtenu en disposant une ligne lumineuse verticale 31 à la distance focale d'une lentille, collimatrice dans la direction horizontale (lentille cylindrique convergente d'axe vertical) 32 (figure 3) ou d'un miroir, collimateur dans la direction horizontale (miroir parabolique convergent dans la direction horizontale) 42 (figure 4).

La réalisation de l'hologramme d'une ligne lumineuse pour obtenir la fonction de diffusion dans la direction verticale à la restitution, est décrite dans le brevet US-A-5.111.313, quoique la forme de l'hologramme soit différente et le faisceau de référence orienté différemment dans ce document.Suivant l'invention, en effet, l'hologramme 34 est réalisé sur une surface plane (voir figures 3 et 4). L'hologramme suivant l'invention produit en tout ou en partie une image d'une ligne verticale en présence d'un angle horizontal entre faisceau de restitution et faisceau image. Comme il est décrit dans le brevet US précité, la ligne lumineuse est un objet linéaire éclairé ou une ligne lumineuse obtenue sur une surface diffusante. La diffusion verticale de l'écran est fonction de la longueur de la ligne lumineuse. La largeur de celle-ci doit être la plus réduite possible pour éviter la diffusion horizontale. A la restitution l'hologramme est celui d'une ligne lumineuse située à l'infini.

Chaque point de l'écran holographique suivant la présente invention produit donc, pour chaque longueur d'onde, l'image d'une ligne lumineuse. Dès que l'hologramme est réalisé, des copies de celui-ci peuvent être obtenues aisément par des techniques connues.

Par la fonction de dispersion latérale, l'écran agit à la façon d'une lentille complexe qui dévie chaque rayon en fonction de sa longueur d'onde et, en focalisant ou faisant diverger les rayons, reconstitue chaque point d'image en relief dont l'information est transmise à partir d'une ligne de cet écran.

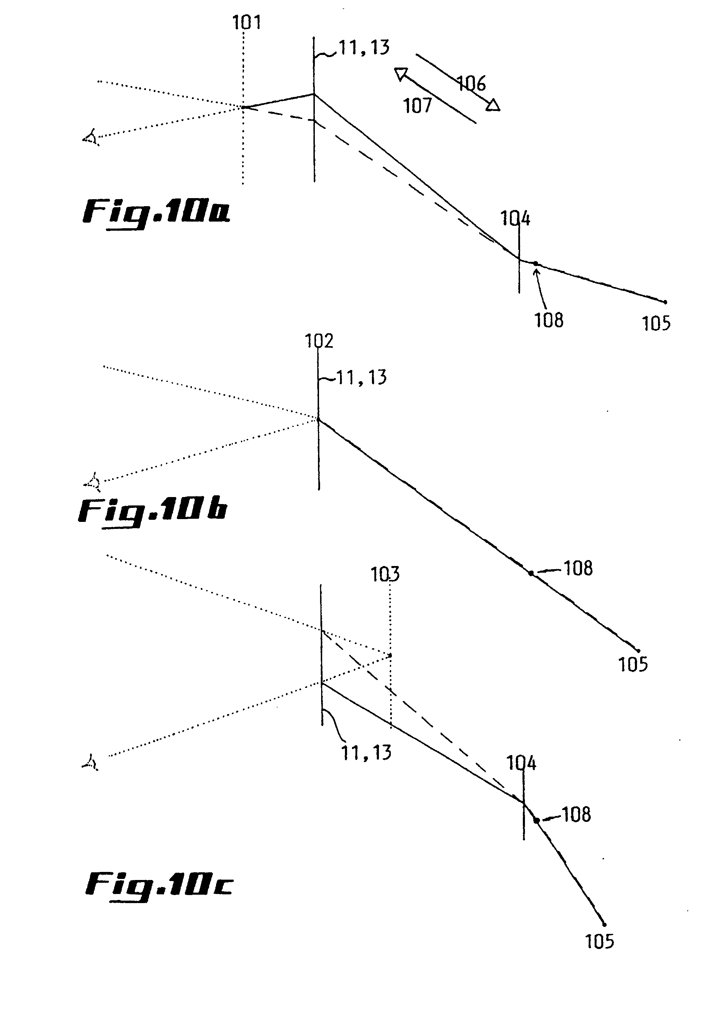

Selon un autre dispositif de l'invention, les éléments constitutifs d'image sont reçus sur un support d'informations d'image. Par exemple ils sont stockés sur un support photosensible 53 (voir figure 5) et ensuite ils sont projetés (figure 6) à partir du support 53 sur l'écran 13.

La figure 6 ne représente que les points d'image en relief A' et A".

Selon l'invention, le support 53 est impressionné séparément par chaque élément constitutif d'image, donc par chaque longueur d'onde, ce que ne peuvent pas faire les supports photosensibles existants. Ceux-ci ne sont pas aptes à effectuer une sélection des différentes radiations, comme l'exige le support de l'invention.

La réception de l'information sur le support nécessite de pouvoir traiter séparément chaque longueur d'onde grâce à un support permettant la projection, en divisant l'image en morceaux dont on choisit le nombre en fonction de la définition d'image en relief souhaitée et en sensibilisant le support à des endroits différents pour chaque longueur d'onde, dans chaque morceau d'image, en y constituant un spectrogramme. Chaque spectrogramme est ainsi formé d'autant d'images élémentaires que le spectrogramme comporte de longueurs d'onde, avec une image élémentaire par longueur d'onde : le support réalise une analyse spectrale.

Pour former les images élémentaires, on réalise, en amont de la couche photosensible 76 (voir figures 7a, 7b, 8a et 8b), au moins deux fonctions, une fonction de dispersion et une fonction de focalisation des rayons électromagnétiques 71 projetés par exemple au fond de la chambre noire 54 de l'appareil de prise de vues 55, qui est par exemple représenté de manière schématique en traits interrompus sur la figure 5.

Quatre variantes de support suivant l'invention sont illustrées ici à titre non limitatif. Selon une première variante, le support d'image 53 comprend, par morceau d'image, une lentille réfringente cylindrique convergente 79 qui est associée, en amont ou en aval de celle-ci, à un réseau 72 qui réalise une fonction de dispersion avec déviation latérale des rayons autour d'axes de dispersion parallèles. La lentille 79 présente un axe parallèle à ces axes de dispersion et donc les fonctions de convergence et de dispersion ont la même orientation. La couche photosensible 76 est placée en aval de façon à focaliser les rayons pour y former les images élémentaires. Le réseau 72 utilisé peut être semblable à celui 11 au travers duquel on réalise la prise de vues. Seules deux ou trois images élémentaires sont représentées (73, 74 et 75).

Selon une autre variante du support suivant l'invention, illustrée sur la figure 7b, une lentille diffractante convergente 77, placée en amont de la couche photosensible, assure les deux fonctions. Cette lentille est un réseau de diffraction qui réalise la fonction de dispersion, vers un même côté, autour d'axes de dispersion parallèles tout en focalisant les rayons dans la direction perpendiculaire à ces axes de dispersion. L'holographie permet de réaliser facilement ce type de lentille. Un exemple de réalisation peut être obtenu à partir du montage exposé à la figure 91, p. 164, de l'ouvrage "HOLOGRAMMES" de Graham Saxby, Masson, 1984, dont on a, en outre, collimaté les deux faisceaux dans la direction perpendiculaire au plan du dessin dans cette figure. Pour soutenir cette lentille 77 on dispose, entre celle-ci et la couche photosensible 76, une couche transparente 78.

Selon deux autres variantes de l'invention (figures 8a et 8b), on ajoute un prisme 81 dans chaque morceau de support. Celui-ci réalise deux fonctions : une fonction de dispersion du côté opposé à la dispersion avec déviation latérale décrite dans les deux premières variantes, pour que la déviation aval atténue ou redresse la déviation amont.

Cela permet de pouvoir davantage dévier par la diffraction. De plus, la réfraction par le prisme 81 dévie plus fortement les petites longueurs d'onde et cette dispersion supplémentaire accentue la séparation des images élémentaires 82 et 83. Cette meilleure séparation améliore la qualité de la parallaxe obtenue. Le prisme exerce également une fonction de réflexion 85 des rayons de l'ordre zéro dont l'angle d'incidence sur la face aval du prisme est supérieur à l'angle critique de réflexion totale. Un rayon 85, représenté à la figure 8a, subit cette réflexion. On dispose, d'amont en aval, les trois pièces optiques, le réseau 72, la lentille 79 et le prisme 81, selon l'ordre souhaité. Le prisme 81 doit se trouver en aval du réseau de diffraction 72 dans le cas de la figure 8a, de la lentille diffractante 77 dans le cas de la figure 8b, pour que l'ordre zéro de la diffraction puisse subir la réflexion totale. La figure 8a ne montre qu'un exemple de configuration de prisme. On peut noter, dans le haut de la figure 8a, que le prisme 81 peut être agencé à distance de la lentille 79 ou, comme représenté au bas de cette figure, être collé contre elle ou même être fabriqué d'une pièce avec elle.

Dans la figure 8b, le prisme 81 est agencé en aval de la couche transparente 78 du support suivant l'invention illustré sur la figure 7b.

Selon un exemple simple de réalisation de ces variantes, d'une part, tous les morceaux du support sont étendus d'un bout à l'autre de celui-ci et sont parallèles entre eux, et d'autre part, l'orientation des fonctions est la même pour tous les morceaux. On utilise alors pour la première variante un réseau lenticulaire à lentilles réfringentes cylindriques convergentes d'axes parallèles et un réseau de diffraction qui disperse latéralement par rapport à l'orientation desdits axes (figure 7a), pour la deuxième variante un réseau lenticulaire à lentilles diffractantes convergentes d'orientation identique (figure 7b) et pour les deux autres variantes, en supplément, un réseau de prismes d'orientation identique (figures 8a et 8b).

La couche photosensible est, soit argentique du type film cinématographique, soit électronique du type capteurs CCD de caméscope, pour la prise de vues, et du type matrice à cristaux liquides d'un vidéoprojecteur, pour la projection. On transforme alors, grâce à ces capteurs CCD photosensibles, les images élémentaires en signaux, soit pour les enregistrer dans une mémoire magnétique ou numérique, soit pour les transmettre immédiatement au projecteur.

Lorsqu'on utilise une couche photosensible argentique pour obtenir des vues animées : soit seule la couche 76 ou respectivement 95 portant les images élémentaires se déplace, soit tout le support 53 se déplace, lors du remplacement d'une image par la suivante, et cela pendant la prise de vues et respectivement la projection.

On remarquera que, lorsque l'information est sous forme numérique, elle peut être traitée pour créer des effets spéciaux. Dans ce cas, les éléments constitutifs d'image sont modifiés. Il est possible aussi de créer des éléments constitutifs d'image de synthèse.

Pour la projection, on oriente le support d'informations d'image et l'objectif de façon à permettre une mise au point de l'image en relief obtenue sur l'écran. Le problème de la projection en oblique a déjà été traité par exemple dans le brevet US-A-3.802.769.

Deux orientations de support 53 et 53' et d'objectif de prise de vues 12 et 52' sont proposées à la figure 5. La figure 6 montre une projection dans laquelle l'orientation du support 53, 53', par rapport à l'objectif de projection 62, 62', est la même qu'à la prise de vues illustrée sur la figure 5.

Même si la forte inclinaison des rayons sur l'axe de l'objectif, lors de la prise de vues, provoque des aberrations telles que par exemple une aberration chromatique, celles-ci sont corrigées ou atténuées à la projection où ladite inclinaison est également importante.

Lors de la projection (figure 9), on irradie en amont de la couche 95 portant à présent les images élémentaires, en général avec une source lumineuse ordinaire de projection 91. Le support 53 se comporte alors, à partir de chaque image élémentaire, comme un petit projecteur qui décompose le faisceau qui le traverse et dans lequel les rayons sont déviés suivant leur longueur d'onde. Selon le principe du retour inverse de la lumière, les rayons projetés dans la direction inverse 93 de celle de la prise de vues suivent des déviations dans le support dont la forme est identique. Dans ce cas l'objectif de projection 62 est disposé à la même place que l'objectif de prise de vues 12, par rapport au support 53. Cette disposition permet de projeter un faisceau dans lequel chaque longueur d'onde véhicule une information qui lui est propre : un élément constitutif d'image et donc un angle de vue de points d'image en relief. Chaque longueur d'onde véhicule donc une partie de l'information de chaque morceau d'image. Chaque image élémentaire correspond à une longueur d'onde, la même qu'à la prise de vues. L'ensemble des images élémentaires recompose le domaine spectral de la prise de vues, dans chaque morceau d'image. Ainsi la projection reconstitue les morceaux d'image à partir des spectrogrammes, donc à partir des images élémentaires.

Dans d'autres directions 92 et 94 latéralement, le "petit projecteur" envoie d'autres longueurs d'onde que suivant la direction 93, longueurs d'onde correspondant à chaque image élémentaire 74. Les plus grandes longueurs d'onde 92 sont davantage déviées que les petites 94. Ces autres directions ne sont pas celles de l'objectif de projection 62 et les rayons de longueurs d'onde correspondantes ne sont pas projetés sur l'écran 13.

Les figures 10a, 10b et 10c illustrent à la fois une prise de vues 106 et une projection 107 selon que le sens de propagation des rayons est vers la droite ou vers la gauche sur ces figures. Il est représenté, aux figures 10a et 10c, des déviations à travers deux réseaux de diffraction 11 et 104 ou respectivement 104 et 13, réalisant ainsi une prise de vues "secondaire" ou respectivement une projection "secondaire". On dévie au travers du réseau primaire 11 ou de l'écran 13 et du réseau secondaire 104, ce dernier étant placé entre le réseau primaire ou l'écran et l'objectif. Le centre de l'objectif de prise de vues ou de projection est représenté sur ces figures par le point 108.

Les niveaux représentés 101, 102 et 103 dits "niveaux de référence" contiennent les points d'objet ou d'image en relief théoriques correspondant à des points homologues 105 dont le décalage est minimum.

Suivant que le réseau secondaire 104 dévie en sens contraire ou dans le même sens que le réseau primaire 11 ou l'écran 13, ledit niveau de référence est du côté opposé 101 ou du même côté 103 du réseau primaire ou de l'écran, par rapport au réseau secondaire 104. Dans le cas où l'on n'utilise pas de réseau secondaire, ce niveau de référence 102 est superposé au réseau primaire 11 ou à l'écran 13. De l'utilisation du réseau secondaire, il résulte donc un éloignement, par rapport au plan du réseau primaire 11 ou de l'écran 13, du niveau de référence, d'autant plus fort que le réseau secondaire 104 disperse davantage et que la distance séparant ce dernier du réseau primaire ou de l'écran est importante.

On peut aussi envisager un autre cas, non représenté à la figure 10, où le réseau secondaire dévie en sens contraire et les déviations y sont plus importantes qu'au travers du réseau primaire ou de l'écran.

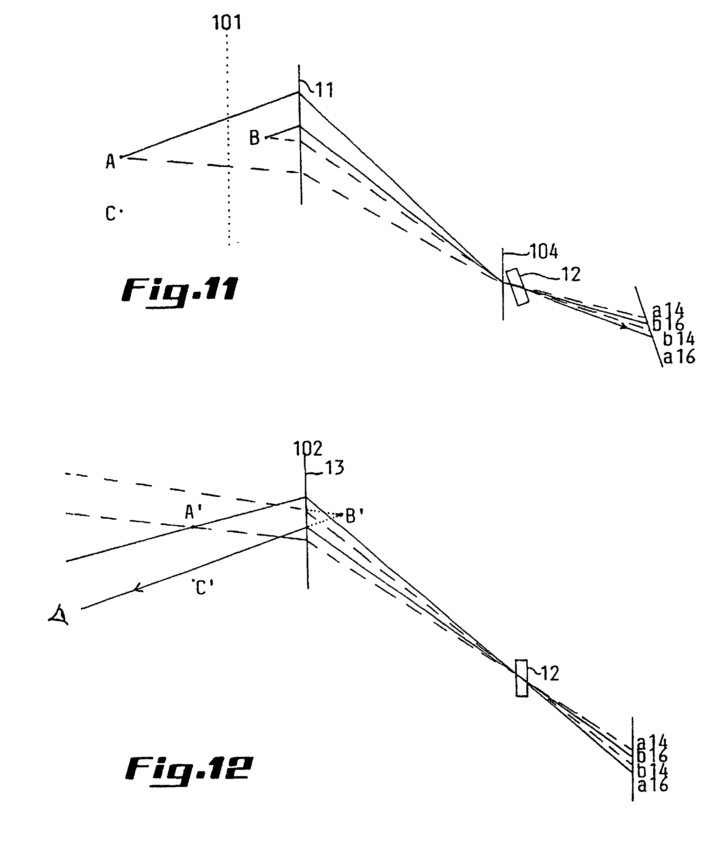

Les éléments constitutifs d'image obtenus par la prise de vues primaire d'une scène sont en décalage les uns par rapport aux autres et dans les cas illustrés horizontalement par rapport à la direction verticale de l'image en relief à obtenir. Chacun d'eux est partiellement superposé à son voisin. L'usage d'un réseau secondaire modifie le décalage des points homologues. On peut observer la position des points homologues correspondant aux points d'objet A et B lors d'une prise de vues avec réseau secondaire 104 (a 14, a 16, b 14 et b 16 sur la figure 11) ou sans (a 11, a 13, b 11 et b 13 sur la figure 5). Comparés à une prise de vues primaire, les points homologues correspondant au point d'objet A se sont rapprochés les uns des autres avec l'utilisation d'un réseau secondaire. Les points homologues b voient, quant à eux, leur ordre s'inverser.

Lors d'une projection primaire (figure 12), les points d'image en relief obtenus à partir de ces points homologues (a 14,a 16, b 14 et b 16) résultant d'une prise de vues secondaire (figure 11) se situent en A' et B'.

Lorsque le décalage entre les points homologues correspondant à un point d'image en relief est ainsi modifié, toutes les séries de points homologues subissent une modification semblable, car le déplacement affecte chaque élément constitutif d'image en entier. Il en résulte que les éléments constitutifs d'image ainsi modifiés reconstituent une image en relief plus en avant ou plus en arrière par rapport à l'écran, lorsqu'on compare sa position avec celle obtenue sans réseau secondaire à la prise de vues (voir pour cela la différence de position de A' entre les figures 12 et 6). Il faut remarquer que l'appareil de prise de vues de la figure 11 est orienté en tenant compte de la déviation au travers du réseau secondaire, en prévision de la projection (figure 12).

Dans l'exemple de la figure 12, l'écran agit comme une lentille convergente pour le point d'image en relief A' et comme une lentille divergente pour le point d'image en relief B'.

Lorsqu'on regarde immédiatement, à travers l'écran, les éléments constitutifs formés en aval de l'objectif, on peut réaliser une prise de vues avec projection primaire (figure 1) ou une prise de vues avec projection secondaire. Dans ce dernier cas, le réseau secondaire se place sur le trajet optique entre le réseau primaire et l'écran.

Selon l'invention on peut utiliser plusieurs appareils de prise de vues et de projection. On réalise ainsi une image en relief où le spectateur peut observer plus d'une longueur d'onde sous certains angles de vue. Plus d'une longueur d'onde rayonnent dans ces directions. En lumière visible, l'image en relief obtenue est en couleurs. L'utilisation de plusieurs supports permet aussi d'augmenter le nombre d'angles de vue obtenus.

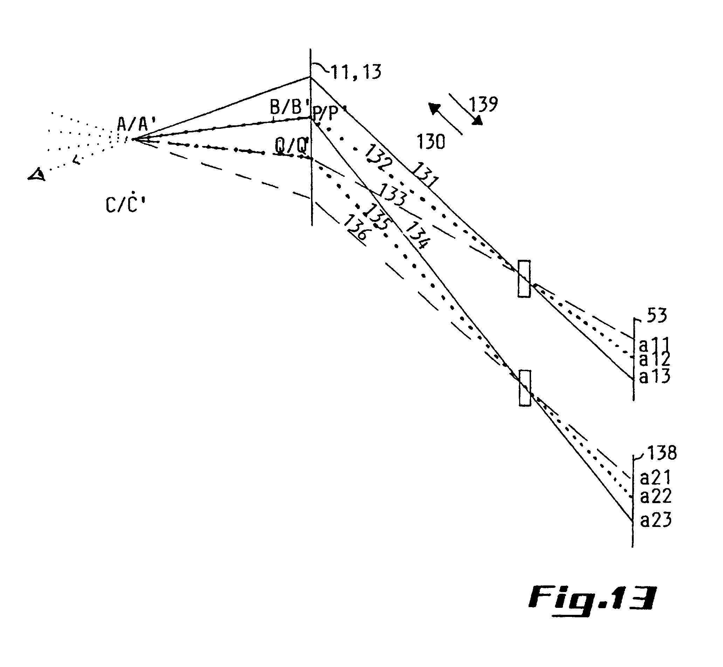

La figure 13 montre la sensibilisation, en a 12 et a 23, de deux supports voisins 53, 138 par deux rayons 132 et 134 provenant d'un point d'objet A, dont les orientations sont toutes deux A-P avant déviation par le réseau primaire 11. Les deux points d'image obtenus correspondent donc à un même angle de vue P-A.

Avec un objectif, on sensibilise un même support avec des points (homologues) d'image d'angles de vue différents.

Avec plusieurs objectifs, on sensibilise des supports différents avec des points d'image de même angle de vue.

L'écart angulaire entre les rayons 132 et 134, en aval du réseau primaire, correspond à leur différence de déviation, au travers de celui-ci.

Toujours selon la figure 13, les rayons représentés correspondent à une longueur d'onde déterminée, par exemple :
les rayons 131 et 134 représentent la longueur d'onde de 700 nm,
les rayons 132 et 135 celle de 550 nm, et
les rayons 133 et 136 celle de 400 nm.

Les longueurs d'onde intermédiaires entre ces trois valeurs ne sont pas représentées.

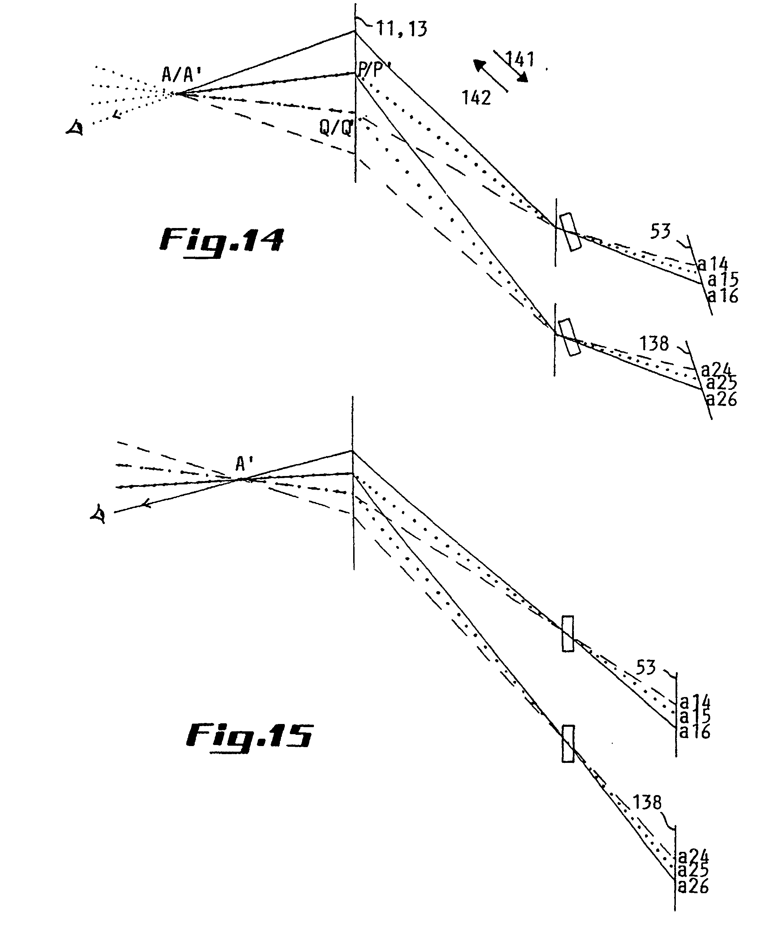

Selon le sens de propagation des rayons, les figures 13 et 14 représentent une prise de vues (139, 141) de A vers les supports 53, 138, et une projection (130, 142) des supports 53, 138 vers l'oeil du spectateur en passant par A'.

En plus des angles de vue communs à deux supports voisins 53, 138, le support 138 permet d'obtenir des angles de vue qui lui sont propres. Par rapport aux angles de vue obtenus par le support 53, le rayon 136 ainsi que les rayons parcourant un trajet intermédiaire entre les rayons 135 et 136 permettent d'obtenir autant d'angles de vue supplémentaires grâce au support 138. Les paires d'angles de vue identiques se situent entre et y compris les directions Q-A et P-A.

Lors de la projection (130), le rayon 132 projeté à partir du support 53 et le rayon 134 projeté à partir du support 138 suivent la même orientation P'-A' après déviation par l'écran 13. L'écart angulaire entre les rayons 132 et 134, en amont de l'écran 13, correspond à leur différence de déviation, au travers de celui-ci.

Chaque paire d'angles de vue identiques d'un même point d'image en relief laisse apparaître deux rayons caractérisés chacun par une longueur d'onde. Le spectateur observe sous cet angle les deux longueurs d'onde, chacune d'elles ayant sa propre intensité. La couleur de ce point d'image en relief est fonction de l'intensité de l'un et de l'autre rayon. Selon cette caractéristique de l'invention, l'image en relief obtenue en lumière visible présente des nuances de couleurs.

L'objet dont on réalise la prise de vues, émet des rayons selon une distribution spectrale déterminée. En lumière visible cette distribution produit la couleur de l'objet que nous pouvons voir à l'oeil nu. La projection reconstitue, à partir de chaque support, chaque point d'image en relief avec des rayons dont la composition spectrale est identique à celle du point d'objet correspondant dont on a réalisé la prise de vues. On peut considérer la longueur d'onde de 550 nm comme étant par exemple de couleur verte. Si le point d'objet A émet la longueur d'onde de 550 nm (vert) avec une plus grande intensité que la longueur d'onde de 700 nm (rouge), le support 53 sera plus fortement impressionné par le rayon 132 (550 nm) que le support 138 par le rayon 134 (700 nm). A la projection, l'angle de vue P'-A' montrera une plus forte intensité pour la longueur d'onde de 550 nm et la couleur du point d'image en relief A' obtenue sera plutôt verte dans la direction P'-A'.

La paire de longueurs d'onde pourra faire apparaître des points d'image en relief plutôt verts et d'autres plutôt rouges. D'autres couleurs, comme le jaune ou l'orange, résultent de la superposition de ces deux radiations. La couleur résulte du mélange additif des couleurs spectrales, selon le diagramme de chromaticité bien connu de l'homme de métier.

La qualité de couleur obtenue est d'autant meilleure que le nombre de supports est important, et partant, le confort visuel est amélioré. Pour un même angle de vue d'un point d'image en relief, augmenter le nombre de longueurs d'onde permet de se rapprocher des couleurs naturelles.

Dans ce cas et selon notre exemple, lorsque l'objet est vert à l'oeil nu, l'image en relief obtenue présente une plus grande proportion d'angles de vue verts, par comparaison avec un objet qui est d'une autre couleur à l'oeil nu.

Selon l'invention, le domaine spectral, auquel chaque support est sensible, peut être différent d'un support à l'autre. Par exemple, celui du support 53 peut être situé entre 400 et 550 nm et celui du support 138 entre 550 et 700 nm.

Lorsqu'on réalise une prise de vues secondaire ou une projection secondaire, on dispose un réseau secondaire dans le trajet optique entre le réseau primaire ou l'écran et chaque objectif.

Le réglage de la projection s'effectue en choisissant correctement la position et l'orientation de chaque appareil de projection et, dans le cas d'une projection secondaire, la position et l'orientation de chaque réseau secondaire.

Une prise de vues ou une projection secondaires peut s'effectuer au travers d'un réseau secondaire commun à tous les objectifs.

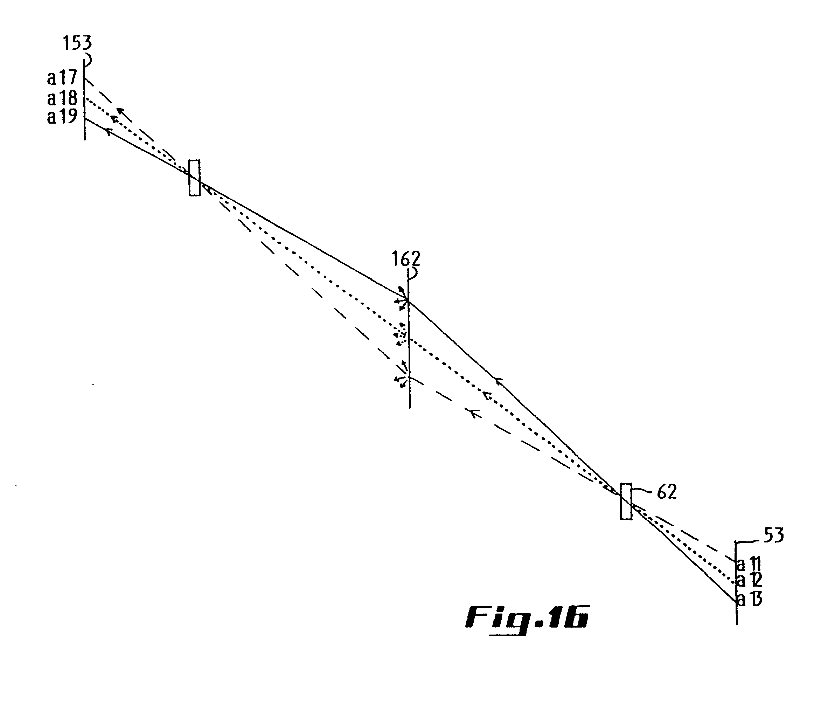

La figure 15 illustre une projection primaire à la suite d'une prise de vues secondaire telle que celle réalisée à la figure 14.

Lorsqu'on projette des vues animées, les différents appareils de projection doivent être synchronisés entre eux.

Selon un procédé de l'invention, on inverse le relief de l'image à obtenir, c'est-à-dire la parallaxe. Par cette opération, le relief orthoscopique devient pseudoscopique et vice versa. Comme illustré sur la figure 16, on réalise un transfert des éléments constitutifs sur un autre support 153 où l'on a, par rapport au support initial 53, inversé les éléments constitutifs dans le sens gauche-droite. Cette opération permet d'inverser la parallaxe de l'image en relief à obtenir.

Pour réaliser ce transfert, d'une part, on effectue une projection dite "de transfert" à partir du support initial 53, sur une surface diffusante translucide 162, des éléments constitutifs d'image reconstitués à partir des images élémentaires, et d'autre part, on réalise une prise de vues dite "de transfert", de l'autre côté de ladite surface diffusante, des éléments constitutifs sur un support 153, tel que celui décrit dans cette invention, pour y former de nouvelles images élémentaires.

On réalise l'opération de transfert pour chaque support séparément.

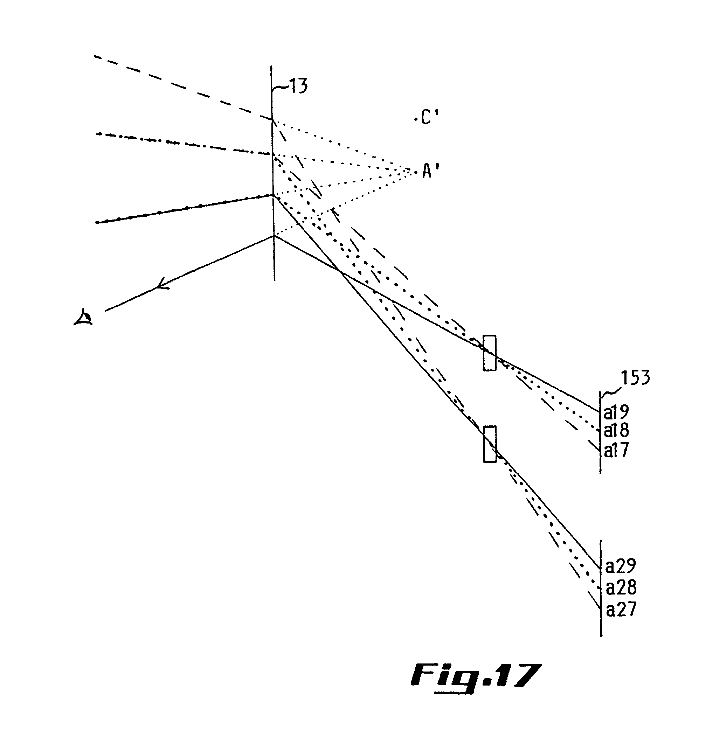

Après transfert, on projette sur l'écran à partir du support 153, selon le principe de projection décrit précédemment dans cette invention (figure 17). L'angle, par rapport à la surface diffusante translucide 162, sous lequel est réalisé la prise de vues de transfert, est choisi en fonction de l'angle sous lequel on souhaite projeter sur l'écran.

Par comparaison des figures 13 et 17, on constate que les points A' et C' réels sont devenus virtuels, que leur ordre est inversé dans le sens gauche-droite et que les couples d'angles de vue identiques sont reconstitués après transfert. Tout comme pour les points A' et C', le sens gauche-droite et le relief de toute l'image sont inversés.

Selon l'invention on peut également dévier la projection de transfert et/ou la prise de vues de transfert en plaçant dans le trajet optique un réseau de diffraction supplémentaire qui disperse latéralement, tel que celui précédemment décrit dans cette invention.

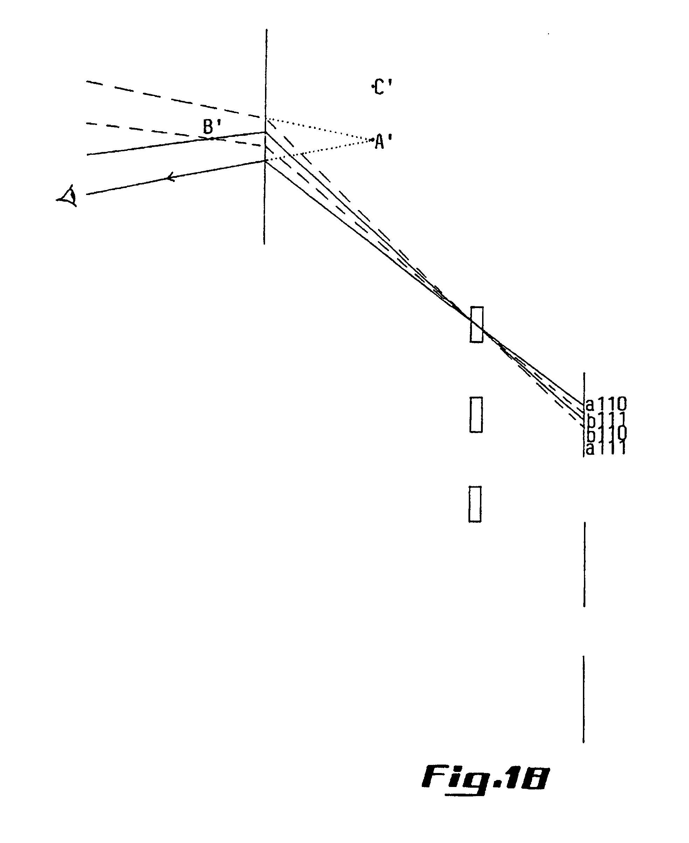

En outre, conformément à la présente invention, les différentes possibilités de réalisation décrites, avec utilisation de support(s), peuvent être combinées entre elles. On peut citer comme exemple : la réalisation d'une prise de vues secondaire avec plusieurs supports, suivie de l'opération de transfert et d'une projection primaire : la figure 18 montre un exemple d'image en relief obtenue avec trois supports. Ici, on n'a pas représenté les rayons provenant des deuxième et troisième supports pour faciliter la lecture du dessin.

Il doit être entendu que tous les réseaux primaires, secondaires ou autres utilisés suivant la présente invention peuvent être du type décrit à propos du réseau 11 et qu'ils peuvent être mutuellement semblables ou différents dans un même dispositif.

Il demeure bien entendu que cette invention n'est pas limitée aux exemples de réalisation décrits et présentés, mais qu'elle en englobe toutes les variantes, qui rentrent dans le cadre des revendications annexées.

## Revendications

1. Procédé d'obtention d'images en relief à parallaxe horizontale comprenant
- une première dispersion par diffraction de rayons électromagnétiques émis par un objet,
- une prise de vues de l'objet au moyen d'au moins un objectif (12) capable de capter au moins une partie desdits rayons électromagnétiques dispersés, et permettant d'obtenir un nombre illimité de points de vue de l'objet, avec un point de vue par longueur d'onde,
- une projection de la prise de vues à travers un moyen d'écran (13), et
- une deuxième dispersion et une diffusion, par le moyen d'écran, de rayons électromagnétiques émis lors de la projection, avec formation d'images en relief de l'objet,
- les première et deuxième dispersions produisant une déviation latérale de rayons émis correspondants.

2. Procédé suivant la revendication 1, **caractérisé en ce que** la première dispersion comprend, à partir des rayons émis par l'objet, une formation d'éléments constitutifs d'image qui sant, par longueur d'onde, différemment déviés latéralement.

3. Procédé suivant la revendication 2, **caractérisé en ce que** la deuxième dispersion comprend une déviation latérale de rayons projetés, dans un même sens ou dans un sens opposé à la déviation latérale de la première dispersion.

4. Procédé suivant l'une quelconque des revendications 1 à 3, **caractérisé en ce que**, dans le moyen d'écran (13), la deuxième dispersion et la diffusion ont lieu successivement.

5. Procédé suivant l'une quelconque des revendications 1 à 3, **caractérisé en ce que**, dans le moyen d'écran (13), la deuxième dispersion et la diffusion ont lieu simultanément.

6. Procédé suivant l'une quelconque des revendications 1 à 4, **caractérisé en ce que** la déviation latérale des rayons a lieu, dans la première dispersion, autour de premiers axes de dispersion parallèles, **en ce que** la déviation latérale des rayons a lieu, dans la deuxième dispersion, autour de deuxièmes axes de dispersion parallèles et **en ce que** la diffusion est effectuée selon des lignes perpendiculaires aux deuxièmes axes de dispersion précités.

7. Procédé suivant l'une quelconque des revendications 1 à 6, **caractérisé en ce que** la projection susdite est effectuée par le ou les objectifs susdits.

8. Procédé suivant l'une quelconque des revendications 1 à 6, **caractérisé en ce qu'**il comprend une réception d'informations d'image, obtenues au cours de la prise de vues, sur au moins un moyen de support d'informations (53) permettant ultérieurement ladite projection.

9. Procédé suivant la revendication 8, **caractérisé en ce que** la réception d'informations d'image comprend un fractionnement des éléments constitutifs d'image en morceaux d'image de grandeur prédéterminée en fonction d'une définition de l'image en relief à obtenir, un isolement, dans chaque morceau d'image, d'une image élémentaire pour chaque longueur d'onde et une impression séparée par ces images élémentaires d'une couche photosensible (76) en tant que moyen de support approprié.

10. Procédé suivant la revendication 9, **caractérisé en ce que** l'isolement des images élémentaires comprend une troisième dispersion des rayons électromagnétiques captés par l'objectif (12), avec déviation latérale de ceux-ci, et une focalisation des rayons ainsi dispersés sur la couche photosensible (76).

11. Procédé suivant la revendication 10, **caractérisé en ce que** l'étape d'isolement comprend une quatrième dispersion, avec une déviation dans un sens opposé à la déviation latérale de la troisième dispersion et une déviation plus intense des petites longueurs d'ondes, ce qui accentue l'isolement des images élémentaires.

12. Procédé suivant l'une quelconque des revendications 9 à 11, **caractérisé en ce qu'**il comprend une projection des images élémentaires reçues sur lesdits au moins un moyen de support approprié par irradiation du ou des supports à l'aide d'une source de rayons électromagnétiques de longueurs d'onde correspondant à celles de l'image, une reconstitution des éléments constitutifs d'image à partir des images élémentaires projetées, cette projection étant effectuée au travers du moyen d'écran (13) susdit.

13. Procédé suivant la revendication 8 à 12, **caractérisé en ce qu'**il comprend une transformation des informations d'image reçues sur le moyen de support approprié en signaux électromagnétiques qui sont retransformés en informations d'image pour ladite projection.

14. Procédé suivant l'une quelconque des revendications 9 à 13, **caractérisé en ce qu'**il comprend en outre, après la réception sur le support d'informations (53),
une projection de transfert à partir du support sur un moyen de diffusion translucide,
une reconstitution des éléments constitutifs d'image à partir des images élémentaires projetées,
une prise de vues de transfert sur un support d'informations supplémentaire, permettant ultérieurement une projection supplémentaire, avec formation de nouvelles images élémentaires, et
ladite projection de cette prise de vues de transfert au travers du moyen d'écran précité.

15. Procédé suivant l'une quelconque des revendications 1 à 14, **caractérisé en ce qu'**il comprend un ajustement de l'éloignement de l'image en relief par rapport au moyen d'écran (13) par une intercalation dans les étapes du procédé d'au moins une dispersion supplémentaire de rayons par diffraction, avec déviation latérale supplémentaire de ceux-ci.

16. Dispositif pour la mise en oeuvre du procédé suivant l'une quelconque des revendications 1 à 7, comprenant
- un premier réseau de diffraction (11) permettant une première dispersion de rayons électromagnétiques émis par l'objet (A, B, C) autour de premiers axes de dispersion parallèles,
- un objectif (12) capable de capter au moins une partie des rayons électromagnétiques dispersés, et
- un moyen d'écran (13) à travers lequel des rayons électromagnétiques provenant de l'objectif (12) subissent une deuxième dispersion et une diffusion avec déviation latérale de rayons émis correspondants autour de deuxièmes axes de dispersion parallèles.

17. Appareil optique pour la mise en oeuvre du procédé suivant l'une quelconque des revendications 1 à 15, comprenant
- un premier réseau de diffraction (11) permettant une première dispersion de rayons électromagnétiques émis par l'objet (A, B, C) autour de premiers axes de dispersion parallèles,
- au moins un objectif (12) capable de capter au moins une partie des rayons électromagnétiques dispersés,
- au moins un moyen de support d'informations d'image (53) capable de recevoir les rayons électromagnétiques captés par le ou les objectifs (12), et de permettre ultérieurement une projection, à travers au moins un objectif de projection (62), des informations d'image transmises par ces rayons électromagnétiques captés, et
- un moyen d'écran (13) à travers lequel des rayons électromagnétiques provenant du ou des objectifs de projection (62) subissent une deuxième dispersion et une diffusion avec déviation latérale de rayons émis correspondants autour de deuxièmes axes de dispersion parallèles.

18. Dispositif suivant l'une ou l'autre des revendications 16 et 17, **caractérisé en ce que** le premier réseau de diffraction (11) est constitué de traits/franges rectilignes parallèles équidistant(e)s qui forment lesdits premiers axes de dispersion.

19. Dispositif suivant l'une quelconque des revendications 16 à 18, **caractérisé en ce que** le moyen d'écran (13) est composé d'un deuxième réseau de diffraction (19) constitué de traits/franges rectilignes parallèles équidistant(e)s qui forment des deuxièmes axes de dispersion et, en amont ou en aval de ce deuxième réseau, d'un diffuseur ligné (20) dont les lignes sont disposées perpendiculairement aux deuxièmes axes de dispersion.

20. Dispositif suivant l'une quelconque des revendications 16 à 18, **caractérisé en ce que** le moyen d'écran (13) est un moyen holographique permettant à la fois la deuxième dispersion et la diffusion.

21. Dispositif suivant la revendication 20, **caractérisé en ce que** le moyen holographique susdit est un hologramme par transmission (34) qui produit en tout ou en partie une image d'une ligne verticale en présence d'un angle horizontal entre faisceau de restitution et faisceau image.

22. Dispositif suivant l'une quelconque des revendications 17 à 21, **caractérisé en ce que** chaque moyen de support d'informations d'image (53) comprend des moyens de fractionnement (72, 77, 79) des éléments constitutifs d'image en morceaux d'image de grandeur prédéterminée en fonction d'une définition de l'image en relief à obtenir, des moyens de dispersion (72, 77) par diffraction de rayons électromagnétiques captés par l'objectif, avec une déviation latérale de ceux-ci autour de troisièmes axes de dispersion parallèles et des moyens de focalisation (77, 79) des rayons ainsi dispersés sur une couche photosensible (76).

23. Dispositif suivant la revendication 22, **caractérisé en ce que** chaque moyen de support (53) comprend, par morceau d'image, une lentille réfringente cylindrique convergente (79) qui est associée à un réseau de diffraction (72) servant de moyen de dispersion susdits et qui réalise une fonction de convergence de même orientation que la dispersion assurée par ledit réseau, ladite couche photosensible (76) étant agencée à une distance permettant n'y focaliser les rayons électromagnétiques traités par la lentille (79) et le réseau (72).

24. Dispositif suivant la revendication 22, **caractérisé en ce que** chaque moyen de support (53) comprend, par morceau d'image, une lentille diffractante convergente (77) qui assure à la fois la dispersion, d'un même côté, et la focalisation sur la couche photosensible (76).

25. Dispositif suivant l'une ou l'autre des revendications 23 et 24, **caractérisé en ce que** chaque moyen de support (53) comprend en outre, par morceau d'image, un prisme (81) agencé de façon à disperser latéralement pour atténuer ou redresser la déviation latérale susdite autour des troisièmes axes de dispersion, et accentuer la dispersion par le réseau de diffraction.

26. Dispositif suivant la revendication 25, **caractérisé en ce que** le prisme (81) est agencé en aval du réseau de diffraction (72) ou de la lentille diffractante convergente (77), de manière à réfléchir par réflexion totale des rayons de l'ordre O de la diffraction.

27. Dispositif suivant l'une des revendications 22 à 26, **caractérisé en ce que** chaque moyen de support (53) est formé d'un réseau de morceaux de moyen de support disposés en bandes étendues d'un bout à l'autre du moyen de support (53) et parallèlement entre elles, de manière que l'orientation des fonctions de chaque morceau soit identique dans toutes les bandes.

28. Ecran permettant une dispersion et une diffusion de rayons électromagnétiques projetés, avec déviation latérale de rayons émis correspondants, pour la mise en oeuvre d'un procédé suivant l'une quelconque des revendications 1 à 15 et intégré dans un appareil suivant l'une quelconque des revendications 16 à 27.

29. Support d'informations d'image capable de recevoir des rayons électromagnétiques captés par un ou des objectifs de prise de vue et de permettre ultérieurement une projection à travers au moins un objectif de projection, d'informations d'image transmises par ces rayons électromagnétiques captés, pour la mise en oeuvre d'un procédé suivant l'une quelconque des revendications 8 à 15 et intégré dans un appareil suivant l'une quelconque des revendications 17 à 27.

## Patentansprüche

1. Verfahren zur Gewinnung von Bildern mit Räumlichkeit mit horizontaler Parallaxe, umfassend
- eine erste Zerlegung von elektromagnetischen Strahlen, die von einem Objekt emittiert werden, durch Diffraktion,
- eine Aufnahme des Objekts mittels mindestens eines Objektivs (12), das imstande ist, mindestens einen Teil der besagten zerlegten elektromagnetischen Stahlen zu erfassen und es gestattet, eine unbegrenzte Anzahl von Blickpunkten des Objekts, mit einem Blickpunkt pro Wellenlänge, zu erhalten,
- eine Projektion der Aufnahme durch eine Bildschirmeinrichtung (13), und
- eine zweite Zerlegung und eine Streuung von bei der Projektion emittierten elektromagnetischen Strahlen durch die Bildschirmeinrichtung, mit Erzeugung von Bildern mit Räumlichkeit von dem Objekt,
- wobei die erste und zweite Zerlegung eine seitliche Ablenkung von entsprechenden emittierten Strahlen verursachen.

2. Verfahren nach Anspruch 1, **dadurch gekennzeichnet, dass** die erste Zerlegung eine Erzeugung von konstituierenden Bildelementen aus vom Objekt emittierten Strahlen umfasst, die pro Wellenlänge unterschiedlich seitlich abgelenkt werden.

3. Verfahren nach Anspruch 2, **dadurch gekennzeichnet, dass** die zweite Zerlegung eine seitliche Ablenkung von projizierten Strahlen in einer selben Richtung oder in einer entgegengesetzten Richtung wie bei der seitlichen Ablenkung der ersten Zerlegung umfasst.

4. Verfahren nach einem der Ansprüche 1 bis 3, **dadurch gekennzeichnet, dass** in der Bildschirmeinrichtung (13) die zweite Zerlegung und die Streuung nacheinander stattfinden.

5. Verfahren nach einem der Ansprüche 1 bis 3, **dadurch gekennzeichnet, dass** in der Bildschirmeinrichtung (13) die zweite Zerlegung und die Streuung gleichzeitig stattfinden.

6. Verfahren nach einem der Ansprüche 1 bis 4, **dadurch gekennzeichnet, dass** die seitliche Ablenkung der Strahlen bei der ersten Zerlegung um erste parallele Zerlegungsachsen stattfindet, dass die seitliche Ablenkung der Strahlen bei der zweiten Zerlegung um zweite parallele Zerlegungsachsen stattfindet, und dass die Streuung entlang von Linien vorgenommen wird, die zur den vorgenannten zweiten Zerlegungsachsen senkrecht sind.

7. Verfahren nach einem der Ansprüche 1 bis 6, **dadurch gekennzeichnet, dass** die oben genannte Projektion durch das oder die oben genannten Objektive vorgenommen wird.

8. Verfahren nach einem der Ansprüche 1 bis 6, **dadurch gekennzeichnet, dass** es einen Empfang von Bildinformationen, die im Verlauf der Aufnahme erhalten wurden, auf mindestens einer Informationsträgereinrichtung (53) umfasst, die später die besagte Projektion gestattet.

9. Verfahren nach Anspruch 8, **dadurch gekennzeichnet, dass** der Empfang von Bildinformationen umfasst: eine Unterteilung der konstituierenden Bildelemente in Bildabschnitte vorbestimmter Größe in Abhängigkeit von einer Auflösung des zu erhaltenden Bildes mit Räumlichkeit, eine Isolierung, in jedem Bildabschnitt, von einem Elementarbild für jede Wellenlänge, sowie eine getrennte Belichtung einer fotoempfindlichen Schicht (76), in der Eigenschaft als geeignete Trägereinrichtung, durch diese Elementarbilder.

10. Verfahren nach Anspruch 9, **dadurch gekennzeichnet, dass** die Isolierung der Elementarbilder eine dritte Zerlegung der vom Objektiv (12) erfassten elektromagnetischen Strahlen, mit einer seitlichen Ablenkung derselben, sowie eine Fokussierung der so zerlegten Strahlen auf der fotoempfindlichen Schicht (76) umfasst.

11. Verfahren nach Anspruch 10, **dadurch gekennzeichnet, dass** der Isolierungsschritt eine vierte Zerlegung mit einer Ablenkung in einer zur seitlichen Ablenkung der dritten Zerlegung entgegengesetzten Richtung und einer stärkeren Ablenkung der kleinen Wellenlängen umfasst, was die Isolierung der Bildelemente verstärkt.

12. Verfahren nach einem der Ansprüche 9 bis 11, **dadurch gekennzeichnet, dass** es umfasst: eine Projektion der auf der besagten mindestens einen geeigneten Trägereinrichtung empfangenen Elementarbilder durch Bestrahlung des oder der Träger mit Hilfe einer Quelle von elektromagnetischen Strahlen mit Wellenlängen, die denjenigen des Bildes entsprechen, eine Wiederherstellung der konstituierenden Bildelemente aus diesen projizierten Elementarbildern, wobei diese Projektion durch die oben genannte Bildschirmeinrichtung (13) vorgenommen wird.

13. Verfahren nach den Ansprüchen 8 bis 12, **dadurch gekennzeichnet, dass** es eine Umwandlung der auf der geeigneten Trägereinrichtung empfangenen Bildinformationen in elektromagnetische Signale umfasst, die für die besagte Projektion zurück in Bildinformationen umgewandelt werden.

14. Verfahren nach einem der Ansprüche 9 bis 13, **dadurch gekennzeichnet, dass** es außerdem nach dem Empfang auf dem Informationsträger umfasst:
eine Übertragungsprojektion aus dem Träger auf eine durchscheinende Streueinrichtung,
eine Wiederherstellung der konstituierenden Bildelemente aus den projizierten Bildelementen,
eine Übertragungsaufnahme auf einen zusätzlichen Informationsträger, der später eine zusätzliche Projektion gestattet, mit Erzeugung von neuen Elementarbildern, und
die besagte Projektion dieser Übertragungsaufnahme durch die vorgenannte Bildschirmeinrichtung.

15. Verfahren nach einem der Ansprüche 1 bis 14, **dadurch gekennzeichnet, dass** es eine Einstellung des Abstandes des Bildes mit Räumlichkeit in Bezug zur Bildschirmeinrichtung (13) durch Einfügen von mindestens einer zusätzlichen Zerlegung von Strahlen durch Diffraktion mit zusätzlicher seitlicher Ablenkung derselben in die Schritte des Verfahrens umfasst.

16. Vorrichtung zur Durchführung des Verfahrens nach einem der Ansprüche 1 bis 7, umfassend:
- ein erstes Diffraktionsgitter (11), das eine erste Zerlegung von vom Objekt (A, B, C) emittierten elektromagnetischen Strahlen um parallele erste Zerlegungsachsen gestattet,
- ein Objektiv (12), das imstande ist, mindestens einen Teil der zerlegten elektromagnetischen Strahlen zu erfassen, und
- eine Bildschirmeinrichtung (13), durch welche die vom Objektiv (12) ausgehenden elektromagnetischen Strahlen einer zweiten Zerlegung und einer Streuung mit seitlicher Ablenkung von entsprechenden emittierten Strahlen um parallele zweite Zerlegungsachsen unterliegen.

17. Optische Einrichtung zur Durchführung des Verfahrens nach einem der Ansprüche 1 bis 15, umfassend
- ein erstes Diffraktionsgitter (11), das eine erste Zerlegung von vom Objekt (A, B, C) emittierten elektromagnetischen Strahlen um parallele erste Zerlegungsachsen gestattet,
- mindestens ein Objektiv (12), das imstande ist, mindestens einen Teil der zerlegten elektromagnetischen Strahlen zu erfassen,
- mindestens eine Bildinformationsträgereinrichtung (53), die imstande ist, die von dem oder den Objektiven (12) erfassten elektromagnetischen Strahlen zu empfangen und später eine Projektion der von diesen erfassten elektromagnetischen Strahlen übertragenen Bildinformationen durch mindestens ein Projektionsobjektiv (62) zu gestatten, und
- eine Bildschirmeinrichtung (13), durch welche die von dem oder den Projektionsobjektiven ausgehenden elektromagnetischen Strahlen einer zweiten Zerlegung und einer Streuung mit seitlicher Ablenkung von entsprechenden emittierten Strahlen um parallele zweite Zerlegungsachsen unterliegen.

18. Vorrichtung nach Anspruch 16 oder 17, **dadurch gekennzeichnet, dass** das erste Diffraktionsgitter (11) aus in gleichen Abständen angeordneten parallelen geradlinigen Strichen/Streifen besteht, welche die besagten ersten Zerlegungsachsen bilden.

19. Vorrichtung nach einem der Ansprüche 16 bis 18, **dadurch gekennzeichnet, dass** die Bildschirmeinrichtung (13) zusammengesetzt ist aus einem zweiten Diffraktionsgitter (19) bestehend aus in gleichen Abständen angeordneten parallelen geradlinigen Strichen/Streifen, welche zweite Zerlegungsachsen bilden, und, vor oder hinter diesem zweiten Gitter, einem Liniendiffusor (20), dessen Linien senkrecht zu den zweiten Zerlegungsachsen angeordnet sind.

20. Vorrichtung nach einem der Ansprüche 16 bis 18, **dadurch gekennzeichnet, dass** die Bildschirmeinrichtung (13) eine holographische Einrichtung ist, welche die zweite Zerlegung und die Streuung gleichzeitig gestattet.

21. Vorrichtung nach Anspruch 20, **dadurch gekennzeichnet, dass** die oben genannte holographische Einrichtung ein Durchlichthologramm (34) ist, das ganz oder teilweise ein Bild einer vertikalen Linie bei Vorhandensein eines horizontalen Winkels zwischen Wiederherstellungsstrahlenbündel und Bildstrahlenbündel erzeugt.

22. Vorrichtung nach einem der Ansprüche 17 bis 21, **dadurch gekennzeichnet, dass** jede Bildinformationsträgereinrichtung (53) umfasst: Einrichtungen zur Unterteilung (72, 77, 79) der konstituierenden Bildelemente in Bildabschnitte von vorbestimmter Größe in Abhängigkeit von einer Auflösung des zu erhaltenden Bildes mit Räumlichkeit, Einrichtungen zur Zerlegung (72, 77) von vom Objektiv erfassten elektromagnetischen Strahlen durch Diffraktion, mit einer seitlichen Ablenkung derselben um dritte parallele Zerlegungsachsen, sowie Einrichtungen zur Fokussierung (77, 79) der so zerlegten Strahlen auf eine fotoempfindliche Schicht (76).

23. Vorrichtung nach Anspruch 22, **dadurch gekennzeichnet, dass** jede Trägereinrichtung (53) pro Bildabschnitt eine lichtbrechende zylindrische Sammellinse (79) umfasst, die mit einem als oben genannte Zerlegungseinrichtung dienenden Diffraktionsgitter (72) verbunden ist und die eine Bündelungsfunktion mit derselben Ausrichtung wie die durch das besagte Gitter sichergestellte Zerlegung vornimmt, wobei die besagte fotoempfindliche Schicht (76) in einem Abstand angeordnet ist, der es gestattet, die durch die Linse (79) und das Gitter (72) aufbereiteten elektromagnetischen Strahlen darauf zu fokussieren.

24. Vorrichtung nach Anspruch 22, **dadurch gekennzeichnet, dass** jede Trägereinrichtung (53) pro Bildabschnitt eine lichtbeugende Sammellinse (77) umfasst, die gleichzeitig die Zerlegung von einer selben Seite her und die Fokussierung auf der fotoempfindlichen Schicht (76) sicherstellt.

25. Vorrichtung nach einem der Ansprüche 23 oder 24, **dadurch gekennzeichnet, dass** jede Trägereinrichtung (53) außerdem pro Bildabschnitt ein Prisma (81) umfasst, das so angeordnet ist, dass es in seitlicher Richtung zerlegt, um die oben genannte seitliche Abweichung um die dritten Zerlegungsachsen zu dämpfen oder auszugleichen und die Zerlegung durch das Diffraktionsgitter zu verstärken.

26. Vorrichtung nach Anspruch 25, **dadurch gekennzeichnet, dass** das Prisma (81) hinter dem Diffraktionsgitter (72) oder der lichtbeugenden Sammellinse (77) angeordnet ist, so dass Strahlen der Ordnung 0 der Diffraktion durch Totalreflexion reflektiert werden.

27. Vorrichtung nach einem der Ansprüche 22 bis 26, **dadurch gekennzeichnet, dass** jede Trägereinrichtung (53) von einem Gitter von Trägereinrichtungsabschnitten gebildet wird, welche in Bändern angeordnet sind, die sich von einem Ende der Trägereinrichtung (53) zum anderen erstrecken und untereinander parallel sind, so dass die Ausrichtung der Funktionen von jedem Abschnitt in allen Bändern identisch ist.

28. Bildschirm, der eine Zerlegung und eine Streuung von projizierten elektromagnetischen Strahlen mit einer seitlicher Ablenkung von entsprechenden emittierten Strahlen gestattet, zur Durchführung eines Verfahrens nach einem der Ansprüche 1 bis 15 und integriert in eine Einrichtung nach einem der Ansprüche 16 bis 27.

29. Bildinformationsträger, der imstande ist, elektromagnetische Strahlen zu empfangen, die von einem Aufnahmeobjektiv oder Aufnahmeobjektiven erfasst worden sind, und später eine Projektion von durch diese erfassten elektromagnetischen Strahlen übertragenen Bildinformationen durch mindestens ein Projektionsobjektiv zu gestatten, zur Durchführung eines Verfahrens nach einem der Ansprüche 8 bis 15 und integriert in eine Einrichtung nach einem der Ansprüche 17 bis 27.

## Claims

1. Method for producing stereoscopic images with horizontal parallax comprising :
- a first dispersion by diffraction of electromagnetic rays emitted by an object,
- a shooting of the object by means of at least one lens (12) capable of collecting at least part of the said dispersed electromagnetic rays, and allowing to obtain an unlimited number of points of view of the object, with one point of view per wavelength,
- a projection of the shot through at least one screen facility (13), and
- a second dispersion and a scattering, by the screen facility, of electromagnetic rays emitted during the projection, with the formation of a stereoscopic image of the object,
- the first and second dispersions producing a lateral deviation of corresponding emitted rays.

2. Method according to Claim 1, **characterised in that** the first dispersion comprises, from the rays emitted by the object, a formation of constitutive elements of the image which are, per wavelength, deviated laterally by different amounts.

3. Method according to Claim 2, **characterised in that** the second dispersion comprises a lateral deviation of projected rays in the same direction as, or in the opposite direction to, the lateral deviation of the first dispersion.

4. Method according to any one of Claims 1 to 3, **characterised in that**, in the screen facility (13), the second dispersion and the scattering take place succesively.

5. Method according to any one of Claims 1 to 3, **characterised in that**, in the screen facility (13), the second dispersion and the scattering take place simultaneously.

6. Method according to any one of Claims 1 to 4,
**characterised in that** the lateral deviation of the rays takes place, in the first dispersion, about parallel first dispersion axes, **in that** the lateral deviation of the rays takes place, in the second dispersion, about parallel second dispersion axes and **in that** the scattering is carried out along lines perpendicular to the second dispersion axes.

7. Method according to any one of Claims 1 to 6, **characterised in that** the aforesaid projection is carried out by the aforesaid lens or lenses.

8. Method according to any one of Claims 1 to 6, **characterised in that** it comprises the reception of image data, obtained during the shooting, on at least one data storage facility (53), making it possible for the said projection to be carried out subsequently.

9. Method according to Claim 8, **characterised in that** the reception of image data comprises a division of the constitutive elements of the image into image portions of a predetermined size dependent on the definition of the stereoscopic image to be obtained, the isolation, in each image portion, of an elementary image for each wavelength and a separate action by these elementary images on a photosensitive layer (76) acting as an appropriate storage facility.

10. Method according to Claim 9, **characterised in that** the isolation of the elementary images comprises a third dispersion of the electromagnetic rays collected by the lens (12), with lateral deviation of the said rays, and a focusing of the rays thus dispersed onto the photosensitive layer (76).

11. Method according to Claim 10, **characterised in that** the isolation step comprises a fourth dispersion, with a deviation in a direction opposite to that of the lateral deviation in the third dispersion and a greater deviation of short wavelengths, which accentuates the isolation of the elementary images.

12. Method according to any one of Claims 9 to 11, **characterised in that** it comprises a projection of the elementary images received on the said at least one appropriate storage facility by irradiation of the said storage facility or facilities by means of a source of electromagnetic rays of wavelengths corresponding to those of the image, a reconstruction of the constitutive elements of the image from the projected elementary images, this projection being carried out through the aforesaid screen facility (13).

13. Method according to Claims 8 to 12, **characterised in that** it comprises a conversion of the image data received on the appropriate storage facility into electromagnetic signals which are reconverted into image data for the said projection.

14. Method according to any one of Claims 9 to 13, **characterised in that** it also comprises, after the reception on the data storage medium (53),
a transfer projection from the storage medium onto a translucent scattering facility,
a reconstruction of the constitutive elements of the image from the projected elementary images,
a transfer shooting on an additional data storage medium allowing a subsequent additional projection, with formation of new elementary images, and
the said projection of this transfer shooting through the aforesaid screen facility.

15. Method according to any one of Claims 1 to 14, **characterised in that** it comprises an adjustment of the spatial separation between the stereoscopic image and the screen facility (13) by inserting in the various steps of the method at least one additional dispersion of rays by diffraction, with additional lateral deviation of the said rays.

16. Device for the implementation of the method according to any one of Claims 1 to 7, comprising
- a first diffraction grating (11) providing for a first dispersion of electromagnetic rays emitted by the object (A, B, C) about first parallel dispersion axes,
- a lens (12) capable of collecting at least a part of the dispersed electromagnetic rays, and
- a screen facility (13) through which the electromagnetic rays coming from the lens (12) undergo a second dispersion and a scattering, with a lateral deviation of the corresponding emitted rays about parallel second dispersion axes.

17. Optical equipment for the implementation of the method according to any one of Claims 1 to 15, comprising
- a first diffraction grating (11) providing for a first dispersion of electromagnetic rays emitted by the object (A, B, C) about parallel first dispersion axes,
- at least one lens (12) capable of collecting at least a part of the dispersed electromagnetic rays, and
- at least one medium (53) for storing image data capable of receiving the electromagnetic rays collected by the lens or lenses (12), and later of making possible a projection, through at least one projection lens (62), of image data transmitted by these collected electromagnetic rays, and
- a screen facility (13) through which the electromagnetic rays coming from the projection lens or lenses (62) undergo a second dispersion and a scattering, with a lateral deviation of corresponding emitted rays about parallel second dispersion axes.

18. Device according to either of Claims 16 and 17, **characterised in that** the first diffraction grating (11) consists of equidistant parallel straight lines/fringes which form the said first dispersion axes.

19. Device according to any one of Claims 16 to 18, **characterised in that** the screen facility (13) is composed of a second diffraction grating (19) consisting of equidistant parallel straight/fringes which form the second dispersion axes and, upstream or downstrean from this second grating, a lineal scatterer (20) whose lines are along a direction perpendicular to the second dispersion axes.

20. Device according to any one of Claims 16 to 18, **characterised in that** the screen facility (13) is a holographic facility providing for both the second dispersion and the scattering.

21. Device according to Claim 20, **characterised in that** the aforesaid holographic facility is a transmitted-light hologram (34) which produces all or part of an image of a vertical line when there is a horizontal angle between the reconstruction beam and the image beam.

22. Device according to any one of Claims 17 to 21, **characterised in that** each image data storage medium (53) comprises means (72, 77, 79) of dividing the constitutive elements of the image into image portions of predetermined size depending on the definition of the stereoscopic image to be obtained, means of dispersion (72, 77) by diffraction of the electromagnetic rays collected by the lens, with a lateral deviation of the said rays about parallel third dispersion axes and means (77, 79) of focusing the rays thus dispersed onto a photosensitive layer (76).

23. Device according to Claim 22, **characterised in that** each storage medium (53) comprises, per image portion, a convergent cylindrical refracting lens (79) which is associated with a diffraction grating (72) serving as the aforesaid means of dispersion and which performs a function of convergence with the same orientation as the dispersion provided by the said grating, the said photosensitive layer (76) being positioned at a distance making it possible to focus on it the electromagnetic rays processed by the lens (79) and the grating (72).

24. Device according to Claim 22, **characterised in that** each storage medium (53) comprises, per image portion, a convergent diffracting lens (77) which provides for both the dispersion on the same side and the focusing onto the photosensitive layer (76).

25. Device according to either of Claims 23 and 24, **characterised in that** each storage medium (53) also comprises, per image portion, a prism (81) positioned so as to disperse laterally in order to attenuate or rectify the aforesaid lateral deviation about the third dispersion axes, and to increase the dispersion by the diffraction grating.

26. Device according to Claim 25, **characterised in that** the prism (81) is positioned downstream from the diffraction grating (72) or the convergent diffracting lens (77), in such a way as to reflect by total reflection the zero-order diffracted rays.

27. Device according to any one of Claims 22 to 26, **characterised in that** each storage medium (53) is formed by a grating of storage medium portions arranged in bands extending from one end to the other of the storage medium (53) and parallel to each other, so that the orientation of the functions of each portion is identical in all the bands.

28. Screen providing for a dispersion and a scattering of projected electromagnetic rays, with a lateral deviation of the corresponding emitted rays, for the implementation of a method according to any one of Claims 1 to 15 and integrated in an equipment according to any one of Claims 16 to 27.

29. Image data storage medium capable of receiving electromagnetic rays collected by shooting lens or lenses and of allowing subsequently a projection through at least one projection lens image data transmitted by these collected electromagnetic rays, for the implementation of a method according to any one of Claims 8 to 15 and integrated in an equipment according to any one of Claims 17 to 27.
